**Europäisches Patentamt**

**European Patent Office**

**Office européen des brevets**

(11) Veröffentlichungsnummer: **0 166 914**
**A2**

(12) # EUROPÄISCHE PATENTANMELDUNG

(21) Anmeldenummer: **85105558.2**

(22) Anmeldetag: **07.05.85**

(51) Int. Cl.⁴: **G 01 N 23/223**

(30) Priorität: **06.07.84 DE 3424937**

(43) Veröffentlichungstag der Anmeldung:
**08.01.86 Patentblatt 86/2**

(84) Benannte Vertragsstaaten:
**AT BE CH FR GB IT LI NL SE**

(71) Anmelder: **Kernforschungszentrum Karlsruhe GmbH**
**Weberstrasse 5**
**D-7500 Karlsruhe 1(DE)**

(72) Erfinder: **Lubecki, Andrzej, Dr.**
**Jasminweg 1**
**D-7513 Stutensee(DE)**

(72) Erfinder: **Rieber, Klaus**
**Donauring 20F**
**D-7514 Eggenstein-Leop.2(DE)**

(54) **Einrichtung zur Messung der Konzentration einer Pulverprobe.**

(57) Die Erfindung betrifft eine Einrichtung zur Messung der Konzentration einer Pulverprobe mittels Röntgenfluoreszenzanalyse, wobei die Pulverprobe mit einer Primär- und Targetstrahlung bestrahlt und die transmittierende und Röntgenfluoreszenzstrahlung mit einem Detektor aufgenommen wird.

Die der Erfindung gestellte Aufgabe besteht darin, eine schnelle und einfache Einrichtung zur RFA-Analyse von schweren Elementen, insbesondere Blei in z.B. PbS-Pulverkonzentraten mit Konzentrationen zwischen 67 und 80 % Pb aus der Blei/Zink-Flotation zu bieten.

Die Lösung ist dadurch gekennzeichnet, daß die Pulverprobe im Abstand zur Primärstrahlenquelle und zum Detektor angeordnet ist, daß die Primärstrahlenquelle als Ring und/oder Scheibe ausgebildet ist, und daß die Primärstrahlung sowie die Targetstrahlung die Pulverprobe vollständig erfaßt.

Fig. 1

EP 0 166 914 A2

Croydon Printing Company Ltd.

Einrichtung zur Messung der Konzentration einer Pulverprobe

_____

Die Erfindung betrifft eine Einrichtung zur Messung
der Konzentration einer Pulverprobe mittels Röntgenfluoreszenzanalyse, wobei die Pulverprobe mit einer
Primär- und Targetstrahlung bestrahlt und die transmittierende und Röntgenfluoreszenstrahlung mit einem
Detektor aufgenommen wird.

Eine derartige Einrichtung ist aus der DE-OS 31 11 187
bekannt. Allerdings werden mit ihr Trüben unabhängig von
Trübendichte und -zusammensetzung ausgemessen, wobei
die Pb-Konzentrationen zwischen 0 und 1 % liegen.

Die der Erfindung gestellte Aufgabe besteht nunmehr
darin, eine schnelle und einfache Einrichtung zur RFA-
Analyse von schweren Elementen, insbesondere Blei in
z.B. PbS-Pulverkonzentraten mit Konzentrationen zwischen
67 und 80 % Pb aus der Blei/ Zink-Flotation zu bieten.

Die Lösung ist in den kennzeichnenden Merkmalen des
Anspruches 1 beschrieben.

Die übrigen Ansprüche geben vorteilhafte Ausführungsformen und Weiterbildungen der Erfindung wieder.

Die Erfindung gestattet demnach eine einfache Methode,
Blei mittels RFA in PbS-Pulverkonzentraten aus der
Blei/Zink-Flotation zu bestimmen.

Da die relativen Intensitätsänderungen der Pb-Ka-Linie, verursacht durch die Änderung der Pb-Konzentration, bei hohen Bleikonzentrationen gering sind, ist die Empfindlichkeit der Analyse durch eine Optimierung der Meßgeometrie erhöht worden. Außerdem ist es gelungen, durch Messung zweier Transmissionslinien (Primärstrahlung, Targetstrahlung) bei geeigneter Detektor-Proben-Quellenanordnung die bei einer einfachen Probenvorbereitung auftretenden Schüttdichteänderungen zu korrigieren. Ein mittlerer Analysenfehler von ca. 0,66 % Pb in einem Konzentrationsbereich von 67 bis 80 % Pb ist akzeptabel.

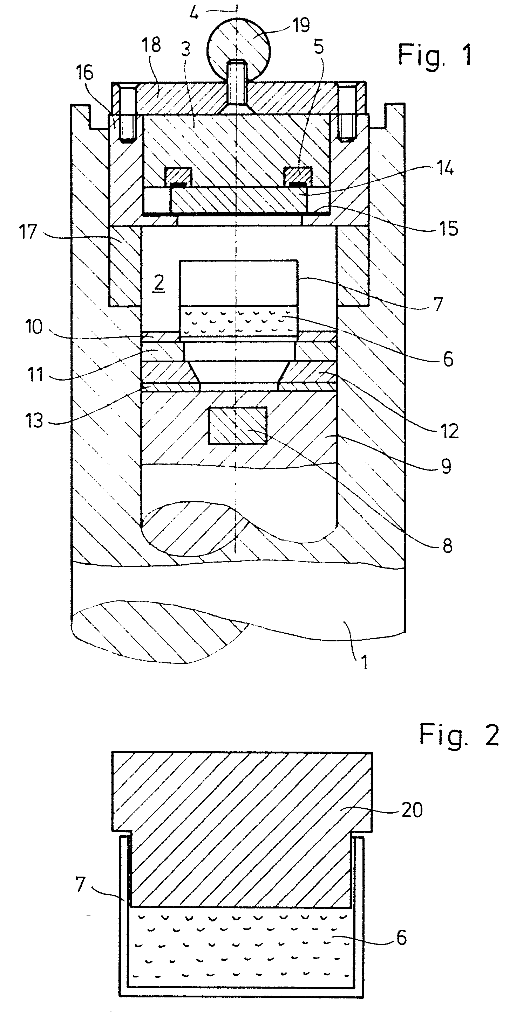

Die Erfindung wird im folgenden anhand eines Ausführungsbeispiels mittels der Figuren 1 und 2 näher erläutert.

Die Figur 1 zeigt im Schnitt das Meßgerät mit einem zylinderförmigen Edelstahlgehäuse 1 mit Ausnehmung 2 und Deckel 3. Auf der Zylinderachse 4 sind in optimierter Geometrie sowohl die Ringquelle 5 (in deren Zentrum eine zusätzliche Scheibenquelle angeordnet werden kann), die Pulverprobe 6 in einem Probengefäß 7 als auch der Detektor 8 zueinander ausgerichtet. Der Detektor 8 sitzt in einem Edelstahlblock 9. Das Probengefäß 7 steht auf einem Zentrierring 10, der über einen Probendistanzring 11, einen W-Kollimator 12 mit konischer Bohrung und über einen weiteren Distanzring 13 auf dem Edelstahlblock 9 befestigt ist.

Die Quelle 5 für die Primärstrahlung, welche sowohl im Hg-Target 14 eine Targetstrahlung als auch in der Probe 6 eine Röntgenstrahlung erzeugt, ist in der Stirnfläche des Deckels 3 eingefügt. Es handelt sich um eine Co-57-Ringquelle. Das Target 14 liegt direkt auf der Stirnfläche des Deckels 3 auf, wobei es die Ringquelle 5 überdeckt. Eine Plexiglasscheibe 15 hält das Target 14 gegen die Stirnfläche gepreßt, wobei sie selbst auf einem umlaufenden Sims eines Quelleneinsatzstückes 16 aufliegt. Dieses Quelleneinsatzstück 16 sitzt auf dem Quellendistanzring 17 auf, wobei es den Deckel 3 zentriert hält und seine Länge den Abstand zur Probe 6 bzw. zum Detektor 8 bestimmt. Eine PVC-Abdeckung 18 mit Knopfgriff 19 bildet die obere Abschlußseite des Deckels 3. Das Material des Deckels 3 dient gleichzeitig als Quellenabschirmung.

Die Abstände Quelle 5 zu Probenmaterial 6 zu Detektor 8 sind derart optimiert, daß möglichst das gesamte Probenmaterial 6 von Primär- und Targetstrahlung getroffen wird.

In Figur 2 ist der Schnitt durch einen Probenbehälter 7 nach Figur 1 dargestellt. Der napfförmige Probenbehälter 7 kann mit dem Probenmaterial 6 bis zu einer bestimmten Höhe gefüllt werden. Mittels eines Stempels 20 ist jedoch diese Schütthöhe durch Ausübung einer Druckkraft variierbar, so daß in einem begrenzten Bereich die Dichte des Probenmaterials 6 beeinflußt werden kann.

Wie bei solchen Meßverfahren üblich, wurde auch hier die Ka1-Linie des Bleis mitels der 122 KeV Gamma-Linie einer Co-57 Quelle 5 erzeugt. Gleichfalls sollte die Transmission dieser Linie und die Transmission der in dem Quecksilbertarget 14 angeregten Hg-Ka1-Linie gemessen werden. Der Reinstgermaniumdetektor 8, ein Vielkanalanalysator und ein Tischrechner (nicht dargestellt) wurden zur Aufnahme und Auswertung der Röntgenspektren benutzt.

Die ersten Testversuche, die über Probenmenge und Geometrie Auskunft geben sollten, zeigten, daß wegen der hohen Pulverschüttdichte (ca. 3,9 g/cm$^3$) des zu analysierenden Materials mit geringen Probenhöhen gearbeitet werden mußte. Da die Probendicke wegen der Reproduzierbarkeit der Probengeometrie und die Probenmasse (Herstellung representativer Proben durch Inhomogenitäten des Materials) nicht zu gering sein sollten, wurde als unterste Grenze der Probenhöhe 4 mm (10 Gramm) gewählt. Außerdem sah man, daß oberhalb 6 mm Probenhöhe, wegen der Absorption im Probenmaterial, keine oder nur ein geringer Teil der Hg-Ka1- und Co-57-Gammalinie gemessen werden konnte. Um einen Eichbereich von 4 bis 6 mm Probenhöhe (10 - 14 g Probenmasse) abdecken zu können, ist bei der Optimierung der Meßgeometrie mit diesen Probenhöhen gearbeitet worden. Der Abstand zwischen der Co-57-Quelle 5 und der Probe 6/7 wurde verringert, damit die Hg-Ka1- und die Co-57-Linie auch bei 6 mm Probenhöhe noch mit guter Statistik gemessen werden konnten. Dabei erhielt man ein besseres Verhältnis der beiden Transmissionslinien zu der erzeugten Pb-Ka1-Linie. Außerdem sah man, daß die zur Erzeugung der Bleilinien eingesetzte Co-57 Ringquelle 5 (zwischen Detektor 8 und Probe 6) vernachlässigt werden konnte, da die zur Durchstrahlung verwendete Quelle 5 eine ausreichende Intensität der Pb-Ka1-Linie erzeugt.

Bei der Anordnung Quelle 5 - Probe 6 - Detektor 8 wurde, neben einem ausgewogenen Peakverhältnis zwischen den zu messenden Linien, auch eine gleichmäßige Durchstrahlung der Probe 6 durchgeführt. Mit Hilfe der beiden Linien (Hg-Ka1 und Co-57) werden Unterschiede in der Probengeometrie (bedingt durch die Probenvorbereitung) und Inhomogenitäten des Probenmaterials 6 korrigiert. Es war deshalb wichtig, einen möglichst großen Teil der Probe 6 zu durchstrahlen. Aus diesem Grund wurden verschiedene Proben-Quellen-Anordnungen getestet. Die für die Optimierungstests verwendeten Proben 6 hatten eine Bleikonzentration von 67 bis 78 %. Die Probenfüllhöhe war 4 und 5 mm. Der Abstand Probe - Detektor wurde so gering wie möglich gewählt (17 mm). Die Distanz Quelle - Detektor war 30 mm (größtmöglichster Abstand). Zur Anregung des Bleis in der Probe 6, des Quecksilbers im Target 14 und zur Durchstrahlung der Probe 6 diente die Co-57-Scheiben- und Ringquelle 5. Bei dieser Geometrie wurde mit der Transmissionsstrah lung der 122 KeV-Linie ein großer Teil des Probevolumens erfaßt. Jede Probe 6 wurde 5 mal vorbereitet und ausgemessen. Dabei sind die Nettopeakflächen der Hg-Ka1-Linie und die Co-57 Primärstrahlung bestimmt worden. Um den Einfluß der Quellengeometrie auf die Reproduzierbarkeit der beiden Intensitäten gut zu erkennen, wurde der Quotient G aus dem mittleren statistischen Fehler der jeweiligen Peakfläche und der Standardabweichung aus den 5 Messungen gebildet.

- 6 -

$$G = \sigma I/s$$

$\sigma I$ = mittlerer statistischer Fehler der Peakfläche s = Standardabweichung aus 5 Messungen

Mit einer Kombination beider Quellen 5 (Scheibe und Ring) wurde die beste Reproduzierbarkeit erreicht, d.h. das größte Probenvolumen ist von den beiden Transmissionsstrahlen erfaßt worden. Da die Halbwertszeit des Co-57 jedoch nur 270 Tage beträgt und somit der Quellenpreis ein permanenter Kostenfaktor ist, kann u.U. auf die Scheibenquelle verzichtet werden.

Die relative Intensitätsänderung der Pb-Ka1-Linie nimmt mit zunehmendem Bleigehalt ab (Selbstabsorption in der Probe). Die zu analysierenden PbS-Pulverproben 6 enthielten Konzentrationen zwischen 67 und 80 % Blei. Die Quellen-Proben-Detektor-Anordnung wurde so optimiert, daß die Meßempfindlichkeit gegenüber Konzentrationsänderungen möglichst groß ist. Die Optimierung wurde mit zwei Pulverproben verschiedener Bleikonzentrationen (79 und 80 %) durchgeführt. Der Abstand Probe - Detektor war konstant, dagegen konnte die Quellenposition gegenüber der Probenposition mit verschiedenen Distanzringen 11, 17 verändert werden. Für jede Quellen-Probenposition ist aus dem gleichen Probenmaterial 6 eine Meßprobe mit 5 mm Probenhöhe 5 mal vorbereitet und gemessen worden. Nach Auswertung des Pb-Ka1-Peaks wurde die Empfindlichkeit E berechnet:

$$E = \Delta I/ \sigma I * \Delta\%Pb$$

$\Delta I$ = Peakflächendifferenz zwischen Konzentration 1 und Konzentration 2 bei gleicher Proben-Quellenposition

$\sigma I$ = mittlerer statistischer Fehler der Peakfläche

$\Delta Pb$ = Bleikonzentrationsdifferenz zweier gemessener Pulverproben

| Abstand (mm) | 0 | 10 | 14 | 20 |
|---|---|---|---|---|
| E | 5 | 11 | 16 | 20 |

Man sieht, daß bei dem größtmöglichen Abstand zwischen Quelle 5 und Probe 6 die Empfindlichkeit E den höchsten Wert annimmt. Bei dieser Geometrie ist auch das von den beiden Transmissionen erfaßte Probevolumen am größten. Anhand dieser experimentellen Daten und theoretischer Überlegungen wurde die Maßanordnung nach Figur 1 gebaut.

Die Proben wurden mit dem in Figur 1 dargestellten optimierten Meßaufbau ausgemessen. In Harz eingegossenes Quecksilberoxyd wurde als Target 14 verwendet. Als Kollimator 12 für die Ringquelle 5 und als Abschirmung wurden Densimet verwendet. Der Reinstgermaniumdetektor 8, ein einfacher Vielkanalanalysator (Canberra S-40) und ein Tischrechner (HP-85) dienten zur Aufnahme und Auswertung der Röntgenspektren. Jede Probe 6 wurde bei der jeweiligen Füllhöhe und Masse 3 mal gemessen. Die Meßzeit betrug 1000 sec. Um eventuellen Inhomogenitäten der Bleikonzentration im zur Verfügung stehenden PbS-Konzentrat entgegenzutreten, wurde zwischen jeder Messung neues Probenmaterial 6 aus der entsprechenden Pulvermenge in den Probenbehälter 7 gefüllt. Um die entsprechende Füllhöhe immer exakt einstellen zu können, wurde für jede Höhe der passende Stempel benutzt (Fig. 2). Die Spektren (gleiche Füllhöhe und Probe) wurden anschließend aufaddiert. Um eventuellen Schwankungen aus der Meßelektronik entgegenzutreten, ist systematisch eine Referenzprobe gemessen worden. Sie bestand aus in PU-Harz eingegossenem PbS-Konzentrat. Die Nettointensitäten der Pb-Kα1-, der 122 keV- und der Hg-Kα1-Linien wurden durch eine lineare Untergrundsubstraktion ermittelt. Der Peakuntergrund ist aus den Integralen der links und rechts an den jeweiligen Peak angrenzenden Bereiche berechnet worden. Die drei Nettointensitäten wurden anschließend normalisiert, d.h. durch einen im Spektrum gewählten Referenzbereich dividiert.

Kernforschungszentrum          Karlsruhe, den 2.Mai 1985
Karlsruhe GmbH                 PLA 8435 Ga/wk
ANR: 1 002 597

Patentansprüche:

1. Einrichtung zur Messung der Konzentration einer
   Pulverprobe mittels Röntgenfluoreszenzanalyse, wobei
   die Pulverprobe mit einer Primär- und Targetstrahlung
   bestrahlt und die transmittierende und Röntgenfluoreszenzstrahlung mit einem Detektor aufgenommen wird,
   dadurch gekennzeichnet, daß die Pulverprobe (6) im
   Abstand zur Primärstrahlenquelle (5) und zum Detektor
   (8) angeordnet ist,
   daß die Primärstrahlenquelle (5) als Ring und/oder
   Scheibe ausgebildet ist, und
   daß die Primärstrahlung sowie die Targetstrahlung
   die Pulverprobe (6) vollständig erfaßt.

2. Einrichtung nach Anspruch 1, dadurch gekennzeichnet,
   daß die Pulverprobe (6) in einem Probenbehälter (7)
   mit veränderbarem Volumen für die Pulverprobe (6)
   untergebracht ist.

3. Einrichtung nach Anspruch 1, dadurch gekennzeichnet,
   daß die Quelle (5), das Target (14), die Pulverprobe
   (6) und der Detektor (8) in einem Abschirmgehäuse
   (1, 9) entlang einer gemeinsamen Achse (4) angeordnet sind.

- 2 -

4. Einrichtung nach Anspruch 1 oder einem der folgenden, dadurch gekennzeichnet, daß die Quelle (5) und das Target (14) am Deckel des Abschirmgehäuses (1, 9) befestigt sind.

5. Einrichtung nach Anspruch 1 oder einem der folgenden, dadurch gekennzeichnet, daß der Abstand Pulverprobe (6) zu Detektor (8) bzw. Quelle (5) mittels Distanzelementen (11, 17) einstellbar ist.

Fig. 1

Fig. 2

0166914